# EUROPEAN PATENT APPLICATION

(11) **EP 1 587 091 A1**
(43) Date of publication of application: **19.10.2005**
(21) Application number: 04703925.0
(22) Date of filing: 21.01.2004
(51) Int. Cl.: G11B 7/24

(54) **INFORMATION RECORDING MEDIUM**

(30) Priority: 24.01.2003 JP 2003015644
(71) Applicant: MITSUBISHI CHEMICAL CORPORATION, Tokyo 108-0014 (JP)
(72) Inventor: MATSUISHI, F., Mitsubishi Kagaku Media Co. Ltd., Tokyo 1080014 (JP); SHIMIZU, K., Mitsubishi Chem. Grp. Rsrh. Ctr. Inc., Yokohama-shi, Kanagawa (JP)
(74) Representative: HOFFMANN EITLE
(86) International application number: PCT/JP2004/000446
(87) International publication number: WO 2004/066292

(57) **Abstract**

It is to provide an information recording medium having a visual information recording layer which is a high sensitive visual information recording layer capable of recording at a relatively low temperature without having a heat effect on an electronic information recording medium and which is excellent also in durability of the display record.

An information recording medium having at least a visual information recording layer for recording visual information and a substrate, **characterized in that** the visual information recording layer contains organic matter particles having a melting point of at least 50°C and at most 180°C and an average particle size of at least 0.5 µm and at most 2.0 µm, and is capable of recording by heating or irradiation with light without substantial chemical change of the organic matter particles.

## Description

### TECHNICAL FIELD

The present invention relates to an information recording medium capable of recording visual information by heat or light. More particularly, it relates to an information recording medium capable of optically recording and retrieving electronic information and further, capable of recording visual information by heating or irradiation with light in a region other than the electronic information recording region.

### BACKGROUND ART

Of an electronic information recording medium for recording, storing and rewriting a lot of information, importance as computer peripheral equipment is increasingly high in recent years. Particularly, an information recording medium on which recording and retrieving are carried out by means of a laser beam attracts attention as a mass storage recording medium since high density recording, storing and retrieving are possible. As examples of such an information recording medium, a phase-change type information recording medium represented by CD-RW or DVD-RW and an organic dye type information recording medium represented by CD-R or DVD-R may, for example, be mentioned.

The content of the electronic information recorded in such an information recording medium can be confirmed by optically retrieving the information. On the other hand, in order to easily confirm the information without optically retrieving it, a method such as recording by printing by means of an inkjet printer or a thermal transfer printer on the label face of the medium or bonding e.g. a label on which the information content is recorded to the label face of the medium, is employed. At all events, it is important to display the content of the electronic information as visual information on the surface of the medium in view of information management.

However, in order to carry out printing by an inkjet method or a thermal transfer method, a special printer is necessary in addition to the recording device for the electronic information, and it is not necessarily a simple method for a person who intends to record visual information on a small amount of mediums i.e. for personal use or the like. Further, with respect to the method of bonding e.g. a label, the label may peel off during use due to the problem of durability of an adhesive, or unbalance during rotation of the medium tends to be significant due to the center slippage at the time of bonding, and in an extreme case, recording and retrieving may not be carried out.

In recent years, a method of recording visual information by irradiation with a laser beam has been proposed (JP-A-2000-105947). In a case of recording by means of a laser beam, a change of the contents in the recording layer such as a reaction, melting or precipitation due to heat generated by irradiation with light is employed. Accordingly, there is a fear that excessive irradiation with a laser beam may have a bad influence over the recording layer for electronic information optically recorded on the same medium, and accordingly careful attention has to be paid to a laser beam irradiation method.

Further, a device for recording and erasing visual information by using a thermal head has also been proposed (JP-A-11-283356), however, similar to the case of irradiation with light, a bad influence over the recording layer for electronic information is concerned, and further attention is required in a case where rewriting is carried out repeatedly.

On the other hand, a method to prevent a bad influence over the electronic information recording layer has been proposed, by defining the display temperature of the visual information on a reversible display recording layer in correlation with the glass transition temperature of the substrate material, with a limitation to a medium having a phase-change type recording layer which is relatively less likely to experience thermal effect, with respect to the electronic information recording layer (JP-A-2000-105947). However, in the case of the reversible display recording layer, increase in recording sensitivity (decrease in display temperature) and heat resistance of the display recorded part usually conflict with each other, such being unsatisfactory as a recording layer having favorable recording sensitivity and having high durability.

### DISCLOSURE OF THE INVENTION

It is an object of the present invention to provide an information recording medium having a visual information recording layer which is a high sensitive visual information recording layer capable of recording at a relatively low temperature without having a heat effect on an electronic information recording medium, and which is excellent also in durability of the display record.

The present inventors have conducted extensive studies to obtain a recording layer for visual information having both high sensitivity and high durability and as a result, have found it effective to disperse organic matter particles having predetermined physical properties in the visual information recording layer, and achieved the present invention.

Namely, the present invention resides in an information recording medium having at least a visual information recording layer for recording visual information and a substrate, characterized in that the visual information recording layer contains organic matter particles having a melting point of at least 50°C and at most 180°C and an average particle size of at least 0.5 µm and at most 2.0 µm, and is capable of recording by heating or irradiation with light without substantial chemical change of the organic matter particles.

In the present invention, the average particle size represents the volume average particle size.

According to the present invention, by incorporating organic matter particles having specific physical properties in the visual information recording layer, a stable focus can be obtained by laser irradiation at a low output, recording of clear visual information with good visibility at a high sensitivity is possible, and recording excellent in storage stability also becomes possible.

Further, since recording on the label face is possible by using a laser for information recording, it is possible, after information is recorded, to record to display the content of the recorded information on the label face by the same laser as the laser for information recording, and thus convenience for consumers can be further improved.

### BRIEF DESCRIPTION OF THE DRAWINGS

Fig. 1: A cross-sectional view illustrating one example of the embodiments of the information recording medium of the present invention.
Fig. 2: A schematic view illustrating the recording mechanism of an information recording apparatus used in Examples and Comparative Examples.

Explanation of numerical references
1 Substrate
2 Electronic information recording layer
3 Reflective layer
4 Protective layer
5 Visual information recording layer
6 Overcoat layer
10 CD-R
11 Optical disk
13 Spindle motor
14 Stepping motor
16 Actuator
17 Laser beam

### BEST MODE FOR CARRYING OUT THE INVENTION

Now, the present invention will be explained in detail.

In the present invention, "visual information" represents information which is visually read, such as characters, symbols, images such as illustrations and photographs, and geometric patterns, and "electronic information" represents information, the content of which is read by some retrieving device, such as information recorded by digital signals.

The information recording medium of the present invention is an information recording medium having at least a substrate and a visual information recording layer to record visual information on the label face, wherein the visual information recording layer contains organic matter particles having a melting point of at least 50°C and at most 180°C and an average particle size of at least 0.5 µm and at most 2.0 µm, is capable of recording without substantial chemical change of the organic matter particles by heating or irradiation with light, is capable of recording at a relatively low temperature and has excellent characteristics such as high sensitivity and durability of the recorded display.

Here, "without substantial chemical change of the organic matter particles" means that such a phenomenon that the compound constituting the organic matter particles chemically reacts with another compound (such as a developer or a dye) to undergo color development, discoloration or color fading, does not substantially occur.

It is essential that the visual information recording layer in the information recording medium of the present invention contains dispersed organic matter particles. By dispersing the organic matter particles in the recording layer, visible light is irregularly reflected, whereby a translucent or opaque i.e. moderately opaque recording layer can be formed. The recording layer is heated by a thermal head or irradiated with a laser beam, whereby the organic matter particles in the recording layer are melted and transparentized, that is, visual information is recorded without substantial chemical change to form a recorded part. In this recorded part, the particles are melted and compatible with another component which forms the layer as mentioned hereinafter and visibly transparentized, and thus the recorded part can be visually distinguished from a non-recorded part. The change in the transparency of the visual information recording layer as between and after the recording of the visual information may be a change at such a level that the change can be visually confirmed, however, it is preferably a change in the transparency of at least 5%, more preferably a change of at least 10%.

On the information recording medium of the present invention, recording of visual information is carried out by melting of the organic matter particles as mentioned above, and thus the melting point of the particles directly influences the recording sensitivity. When the visual information is recorded on the visual information recording layer on the label face by using a thermal head or by using a layer beam, recording at a high temperature may cause thermal effect on the electronic information recording layer on the opposite side and is unfavorable, and thus the melting point of the particles has to be at most 180°C. On the other hand, it is not favorable that the recorded display content is likely to disappear by moisture absorption or heat under usual use environment, and thus the melting point of the particles has to be at least 50°C also. The melting point of the particles is preferably at least 100°C in a case where heat resistance is required in accordance with the recording means such as heating or irradiation with light on the information recording layer, and the melting point of the particles is selected preferably within a range of at most 100°C in a case where high sensitive recording properties are required.

Further, the average particle size of the organic matter particles used in the present invention is at least 0.5 µm and at most 2.0 µm. If it is less than 0.5 µm, the proportion of fine particles having a particle size of at most about 0.2 µm, which are transparent to light having a visible light wavelength tends to increase, whereby transparency of the recording layer before recording tends to be high, and the contrast as before and after the recording tends to decrease, and accordingly visibility tends to decrease. If it exceeds 2.0 µm, the particles are less likely to be melted, and recording sensitivity by heat or light tends to decrease.

In the present invention, in order to realize favorable recording sensitivity, it is preferred that organic matter particles having an average particle size of from 0.5 µm to 2.0 µm are contained in the recording layer in an amount of preferably at least 25%, more preferably at least 30% and preferably at most 70%, more preferably at most 65%.

The minimum particle size of the organic particles used in the present invention is preferably at least 0.01 µm, more preferably at least 0.1 µm. When the particle size of the organic particles is at least this lower limit, the recording layer can be maintained in a moderate opaque state, and the contrast as before and after the recording can be made clear. Further, the maximum particle size is at most 20 µm, preferably at most 10 µm. When the particle size of the organic particles is at most this upper limit, the organic particles can be melted by a thermal head or a laser beam, whereby visual information can be recorded on the recording layer.

Further, the visual information recorded part of the present invention is excellent also in durability as compared with one by a conventional method for recording visual information.

Heretofore, the recording layer to record visual information by a thermal head or a laser beam has, for example, a composition containing a dye and a coloring assistant for the dye for color development of the recorded part. Accordingly, if the recording layer absorbs moisture or it is continuously used in an electronic information recording and retrieving device and is exposed to a high temperature environment, the dye and the coloring assistant gradually react with each other, thus causing color development at the non-recorded part or color fading at the recorded and colored part, such being problematic. Further, as another conventional example, a medium of such a type that the crystal state of e.g. a fatty acid ester contained in the visual information recording layer is reversibly changed to carry out recording by means of the difference in the amount of irregularly reflected light between the crystal line state and the non-crystal line state may be mentioned. However, in this case, it is required to reversibly change the crystal line state and non-crystal line state by the effect of heat, and thus the recording layer has such a drawback that it is poor in heat resistance.

On the other hand, in the visual information recording layer in the information recording medium of the present invention, the organic matter particles are melted at a temperature of at least their melting point for recording, and accordingly, gradual reaction to decrease the S/N ratio does not occur unless the recording layer is heated to at least the melting point after recording, and thus visual information excellent in durability can be obtained.

The information recording medium of the present invention may have at least a substrate and a visual information recording layer, and the present invention can be applied to any substrate or any medium. However, the effect is most effectively provided in an information recording medium having a visual information recording layer together with an electronic information recording layer.

Now, the information recording medium of the present invention will be explained with reference to an information recording medium having an electronic information recording layer (region) and a visual information recording layer (region).

In the information recording medium of the present invention, the visual information recording region is provided at a part other than the region for recording electronic information to be optically recorded. For example, in a disk-like or card-like medium, both regions may be provided on the same plane, or the electronic information recording region and the visual information recording region may be provided on different layers. Further, relative to the substrate, the electronic information recording region and the visual information recording region may be provided on the same side, or may be provided on the opposite side to each other.

The information recording medium of the present invention has, as a usual basic constitution, a substrate, an electronic information recording layer, a reflective layer and a visual information recording layer. It is preferred that the respective layers are laminated in the above order, and it is more preferred that a protective layer is present between the reflective layer and the visual information recording layer. The protective layer is usually a layer useful for protecting the reflective layer formed by a metal or an alloy from e.g. moisture, and in the above-described basic constitution, deterioration of the reflective layer can be prevented usually by separating the reflective layer from the visual information recording layer formed by a wet film formation method.

Further, it is preferred that an overcoat layer is present on the surface of the visual information recording layer (the side of the layer to which heat for recording is applied or which is irradiated with light). The overcoat layer is a layer useful for protecting the medium from physical abrasion or excessive pressure, or for focus of the recording light in a case where recording is carried out on the recording layer by irradiation with light.

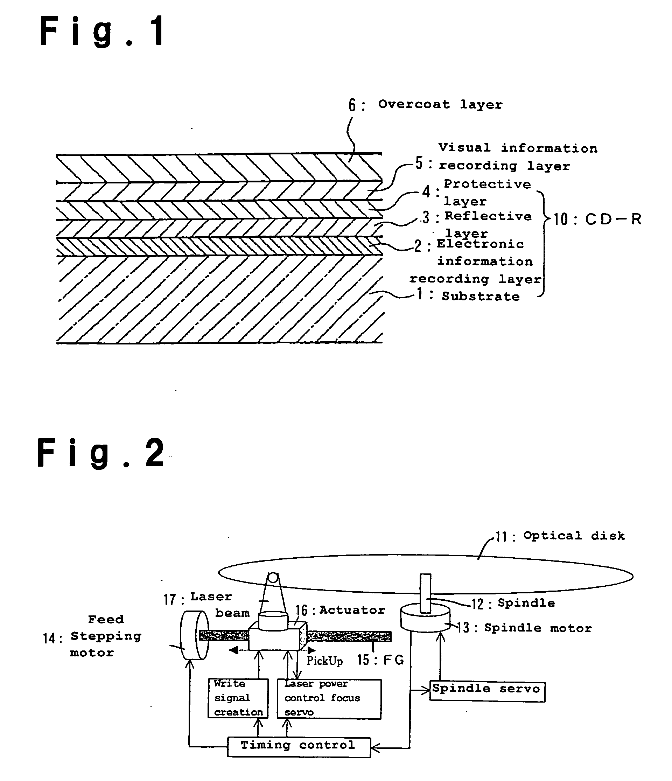

A cross-sectional view of one example of the information recording medium having the above layer constitution is shown in Fig. 1. In Fig. 1, an information recording medium 10 consisting of the respective layers of from a substrate 1 to a protective layer 4 represents a usual CD-R.

Further, it is preferred that a colored layer or a reflective layer is present beneath the visual information recording layer. Particularly in a case where recording is carried out by irradiation with light, it is more preferred that a reflective layer is present beneath the visual information recording layer. By utilizing reflected light, the focus of the recording light (usually laser beam for recording) can be adjusted. Further, an optional transparent layer may be present between the visual information recording layer and the colored layer or the reflective layer, as the case requires.

Specifically, a colored layer or a reflective layer is provided on the side opposite to the side which is irradiated with light or to which heat is applied for visual information recording, relative to the visual information recording layer. In a case where a colored layer is provided, in the constitution of Fig. 1 for example, the protective layer 4 itself may be colored, or a colored layer may be provided between the protective layer 4 and the visual information recording layer 5. In a case where a reflective layer is provided, in the constitution of Fig. 1 for example, a reflective layer may be provided (in addition to the reflective layer 3) between the protective layer 4 and the visual information recording layer 5, or the protective layer 4 may be a transparent layer so that the reflective layer 3 is effective for both electronic information recording layer and visual information recording layer. Visual information is recorded by the part on which recording is to be carried out being transparentized, and accordingly when the colored layer or the reflective layer as a base layer is clearly visible, visibility and design properties increase, such being favorable.

The colored layer of the present invention may be any layer which is colored and is not particularly limited, and it may be formed, for example, by coating an ultraviolet-curing resin containing e.g. a dye or a pigment, followed by curing.

The visual information recording layer in the information recording medium of the present invention contains dispersed organic matter particles, and it is formed preferably by using a binder resin having the particles dispersed therein. Further, in a case of a recording layer for recording visual information by irradiation with light, a photothermal converter is preferably contained. Further, a dispersing agent or optional additives may be contained within a range not to impair the performance of the information recording medium of the present invention.

As the visual information recording layer, a layer containing organic matter particles can be formed by coating a coating liquid prepared by dispersing organic matter particles having a melting point of from 50 to 180°C as mentioned hereinafter, a binder resin, and a photothermal converter and/or other additives to be added as the case requires dispersed in a proper poor solvent.

The organic matter particles to be used in the present invention may be basically ones which satisfy the essentiality of the melting point of at least 50°C and at most 180°C, and which have an average particle size of at least 0.5 µm and at most 2.0 µm.

The organic matter particles having a melting point of at least 50°C and at most 180°C are suitably selected from aliphatic compounds, aromatic low molecular weight compounds and the like. Specifically, a low molecular weight aromatic compound having a weight average molecular weight of at least about 90 and at most about 1500, an aliphatic compound having a weight average molecular weight of at least about 90 and at most about 2000, wax and a dye may, for example, be mentioned. Among them, preferred is a compound which has a low melting point of at least about 50°C and at most about 100°C, which is white and which provides a high contrast after melting.

As examples of the low molecular weight aromatic compound, an aromatic carboxylic acid and its ester such as butyl gallate, n-propyl gallate, isoamyl gallate, lauryl gallate, n-butyl p-hydroxybenzoate, 5-sulfosalicylic acid, benzyl paraoxybenzoate or methyl 3,5-dihydroxybenzoate may be mentioned. As other examples, a phenol such as bisphenol A, 4-hydroxyphenyl(4'-n-propoxyphenyl)sulfone or 2-2'-methylenebis 1-(4-ethyl-6-t-butylphenol) may be mentioned.

As the aliphatic compound, a metal soap such as sodium lauryl sulfate, zinc stearate, calcium stearate, magnesium stearate, calcium laurate, zinc laurate or barium ricinoleate may be mentioned.

As the wax, for example, 1,2-di(3-methylphenoxy)ethane, 1,2-diphenoxyethane, p-benzylbiphenyl, 2-naphthyl benzyl ether, benzyl-4-methyl thiophenyl ether, dibenzyl oxalate, di-p-methylbenzyl oxalate, di-p-chlorobenzyl oxalate, dibutyl terephthalate, dibenzyl terephthalate, stearamide, methylenebisstearamide, benzyl p-benzyloxybenzoate, p-tolyl biphenyl ether, di(p-methoxyphenoxyethyl)ether, 1,2-di(4-methylphenoxy)ethane, 1,2-di(4-chlorophenoxy)ethane, 1,2-diphenoxyethane, 1-(4-methylphenoxy)-2-(3-methylphenoxy)ethane, 1,4-di(phenylthio)butane, p-acetotoluidide, p-acetophenetidide, N-acetoacetyl-p-toluidine, di(β-biphenylethoxy)benzene or 2-(2'-hydroxy-5'-methylphenyl)benzotriazole may, for example, be mentioned.

As the dye, a colorless leuco dye may be mentioned. Specifically, various compounds of e.g. triphenylmethane type, triphenylmethane-phthalide type, fluorane type, phenothiazine type, leucoauramine type, indoline type, indolinophthalide type, diphenylmethane type, spiropyran type or indigo type may, for example, be mentioned, and among them, a phthalide compound is preferred.

Among them, one having a melting point of at least 50°C and at most 180°C is selected.

Further, a dye may be used as the organic matter particles. However, in the information recording medium of the present invention, as described above, the organic matter particles in the visual information recording layer are transparentized by melting to form a recorded part, and the image is visible by a difference between the transparent part (recorded part) and the translucent or opaque part (non-recorded part) of the visual information recording layer. Accordingly, the object can be achieved without using a dye.

The melting point of the organic matter particles is at least 50°C and at most 180°C. If the melting point is less than 50°C, the recorded display content is likely to disappear by e.g. moisture absorption or heat under usual use conditions, and tends to be poor in durability, such being unfavorable. On the other hand, if it is too high exceeding 180°C, recording has to be carried out at a high temperature, which may have a thermal effect on the electronic information recording layer on the opposite side, such being unfavorable. The melting point is preferably at least 80°C and at most 170°C. Further, the melting point of the organic matter particles used varies depending upon the recording means such as heating or irradiation with light on the visual information recording layer, and in a case where heat resistance is required, the melting point of the particles is preferably at least 100°C, and in a case where high sensitive recording properties are required, the melting point of the particles is selected preferably within a range of at most 100°C.

The content of the organic matter particles in the visual information recording layer is preferably at least 25 wt%, more preferably at least 30 wt%, and preferably at most 70 wt%, more preferably at most about 65 wt%.

The visual information recording layer is preferably such that the organic matter particles are contained in the visual information recording layer in such a state that they are dispersed in a binder resin, as mentioned hereinafter. As the binder resin to be used for formation of the visual information recording layer, preferred is one in which the organic matter particles can be favorably dispersed, and which has a high compatibility with the melted organic matter particles.

As the binder resin, specifically, a vinyl chloride type (co)polymer such as polyvinyl chloride, a vinyl chloride/vinyl acetate/maleic acid copolymer, a vinyl chloride/vinyl acetate/acrylic acid copolymer or a vinyl chloride/vinyl acetate/alcohol copolymer; a vinylidene chloride type (co)polymer such as polyvinylidene chloride or a vinylidene chloride/acrylonitrile copolymer; a polyester resin; a polyurethane resin; an acrylic resin; or a polyamide resin may, for example, be mentioned, and they may be used alone or as a mixture of at least two of them.

When a radiation-curing resin curable by e.g. electron rays or ultraviolet rays is mixed with such a resin, the elastic modulus in a high temperature region tends to be high, and improvement of durability can be attempted. As the curing resin, a polyfunctional acrylate monomer excellent in curing properties such as tetraethylene glycol diacrylate or trimethylolpropane triacrylate may, for example, be preferably used. In the case of a ultraviolet-curing resin, an appropriate amount of a photopolymerization initiator of e.g. benzoin type, acetophenone type, thioxanthone type or peroxide type is added for curing and polymerization.

Further, an isocyanate compound and a resin which undergoes heat crosslinking by the compound may be used together with the above-described resin. The content of the heat-crosslinkable resin is at most 70 wt%, preferably at most 50 wt%, based on the binder resin.

The method of heat crosslinking is not particularly limited. For example, when a coating liquid prepared together with the binder resin, etc. is coated, heating or the like is carried out for crosslinking.

As the resin which undergoes heat crosslinking, a polyester resin, a polyurethane resin, an acrylic resin or a polyamide resin, which has a functional group such as a hydroxyl group or a carboxyl group, may, for example, be mentioned. If such a resin is not crosslinked, the visual information recording layer may be softened or melted by instantaneous heating at the time of printing by a laser beam, thus causing warpage on the respective layers of the medium, and fracture, breakage or deformation may be brought about resultingly. However, by three-dimensionally curing the resin by heat crosslinking, the elastic modulus at a high temperature improves, thus suppressing deformation, and accordingly breakage or deformation of the respective layers tends to be small even by instantaneous heating at the time of printing by a laser beam, whereby an information recording medium excellent in durability can be obtained.

As the isocyanate compound, a polyisocyanate compound having a large number of isocyanate groups may be mentioned, and specifically, hexamethylene diisocyanate, toluene diisocyanate or xylylene diisocyanate, or an adduct type, a biuret type or a trimer type of such a polyisocyanate compound by e.g. trimethylol propane may be employed.

The binder resin and the heat-crosslinkable resin may be properly selected taking the material of the organic matter particles and properties of each resin into consideration.

The visual information recording layer in the present invention is a layer on which recording is possible by irradiation with light or heating, and in a case where recording is carried out by irradiation with light, the irradiated light is converted into heat to melt the organic matter particles, and accordingly a photothermal converter is preferably contained.

The photothermal converter may be any compound which absorbs light for visual information recording and converts it into heat energy, and is property selected depending upon the wavelength of the recording light. For example, when visual information is recorded by light having a wavelength of from about 700 to about 900 nm, an infrared ray absorbing dye may be employed. Further, when recording is carried out by light having a shorter wavelength, a compound which has a large light absorption amount at the wavelength of the recording light and which has a high conversion efficiency to heat energy may be selected.

As a compound to be used as the photothermal converter, organic dyes such as triarylmethane dyes, azo dyes, cyanine dyes, squarylium dyes, naphthoquinone dyes, anthraquinone dyes, phthalocyanine dyes, naphthalocyanine dyes, naphthoquinone dyes, porphyrin dyes, indigo dyes, dithiol complex dyes, azulenium dyes, quinonimine dyes or quinonediimine dyes may be mentioned.

With respect to the content of the photothermal converter, since the absorption concentration varies depending upon the type of the photothermal converter, it may be contained so that the reflectivity on the coated surface is preferably at most 50%, particularly preferably at most 30%, in the laser wavelength region used. specifically, the content is at least 0.01 wt%, preferably at least 0.1 wt%, and at most 10 wt%, preferably at most 5 wt%.

In a case where a laser beam having a wavelength of from about 700 to about 900 nm which is widely employed for optical electronic information recording is used as the light for recording visual information, among the above organic dyes, a compound of the following formula (I) is particularly preferred from such a viewpoint that it has a maximum absorption wavelength in said wavelength region, and that it has substantially no absorption in the visible light wavelength region so that visibility of the recorded visual information is good: 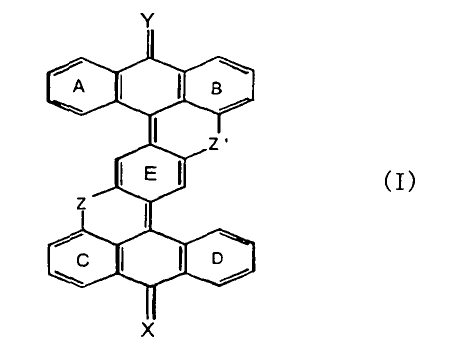 In the above formula, each of the rings A, B, C, D and E has an optional substituent, and to each of the rings A, B, C, D and E, a fused ring may further be condensed. Each of X and Y which are independent of each other, is an oxygen atom, a sulfur atom, a cyanomethylene group of the following formula 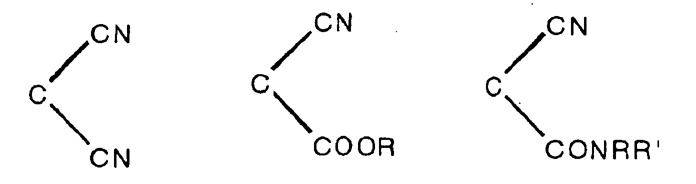 or N-C=N (provided that each of R and R' which are independent of each other, is a hydrogen atom or an optional substituent), and X and Y are not simultaneously oxygen atoms. Each of Z and Z' which are independent of each other, is an oxygen atom, a sulfur atom or -NR''- (provided that R'' is a hydrogen atom or an optional substituent).

The substituent which each of the rings A, B, C, D and E in the above formula (I) may have may, for example, be an alkyl group, a haloalkyl group, an alkoxy group, an alkoxyalkoxy group, a halogen atom, a hydroxyl group, a carboxyl group or a carbonyl group. The number of carbon atoms in the alkyl group, the alkoxy group or the alkyl group moiety in the alkoxyalkoxy group is usually from 1 to 8, and they may be chain or cyclic, and may be linear or branched.

To each of the rings A, B, C, D and E, a fused ring may further condense. As the fused ring which condenses, an aromatic ring, particularly an aromatic hydrocarbon ring such as a phenyl group is preferred.

Further, the weight average molecular weight of the compound of the formula (I) is at least 600 and at most 2000.

Each of X and Y in the formula (I) which are independent of each other, is an oxygen atom, a sulfur atom, a cyanomethylene group of the above formula, or N-C=N (provided that X and Y are not simultaneously oxygen atoms), and each of Z and Z' which are independent of each other, is an oxygen atom, a sulfur atom or -NR''- (provided that R'' is a hydrogen atom or an optional substituent).

Here, each of R, R' and R'' which are independent of each other, is a hydrogen atom or an optional substituent, and more preferably, each of them is a hydrogen atom or a linear or branched alkyl group (having a carbon number of from 1 to 5).

As each of X and Y, particularly preferred is a dicyanomethylene group of the following formula:

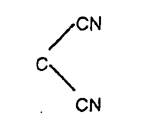

As each of Z and Z', preferred is an oxygen atom or a sulfur atom.

As the compound of the formula (I), preferred is a compound of the following formula (II): 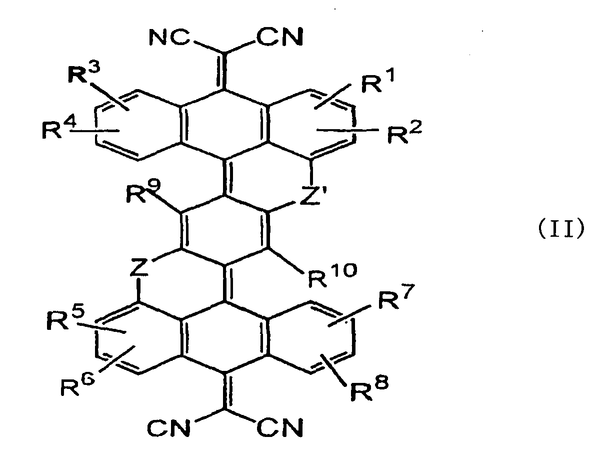 wherein each of R¹ to R¹⁰ is a hydrogen atom or the same as the optional substituent which each of the rings A, B, C, D and E in the formula (I) may have, and each of Z and Z' is as defined for the formula (I).

Each of R¹ to R⁸ in the formula (II) which are independent of each other, is a hydrogen atom or an optional substituent which is the same as the optional substituent which the rings A, B, C, D and E in the formula (I) may have. As such an optional substituent, specifically, the same substituents as described for the above formula (I) may be mentioned, and as a preferred substituent and a more preferred substituent, the above-described substituent may be mentioned.

Each of R⁹ and R¹⁰ which are independent of each other, is a hydrogen atom or an optional substituent which is the same as that in the formula (I), and as the substituent, preferred is a halogen atom, or a linear or branched alkyl group (having a carbon number of from 1 to 5) .

Including the compound of the formula (I), the photothermal converters may be used alone or two or more of them may be used together.

In the visual information recording layer of the present invention, various additives other than the above or a dispersing agent to uniformly disperse the organic matter particles may further be contained within a range not to impair the performance. For example, it is preferred to use a light stabilizer in order to improve light resistance of the visual information recording layer. As the light stabilizer, an ultraviolet absorber, an antioxidant, an age resistor or a singlet oxygen quencher may, for example, be mentioned.

As the ultraviolet absorber, a benzophenone type ultraviolet absorber such as 2,4-dihydroxybenzophenone, 2-hydroxy-4-methoxybenzophenone, 2-hydroxy-4-n-octoxybenzophenone, 4-dodecyloxy-2-hydroxybenzophenone, 2,2'-dihydroxy-4-methoxybenzophenone, 2,2'-dihydroxy-4,4'-dimethoxybenzophenone, 2,2',1,4'-tetrahydroxybenzophenone, 2-hydroxy-4-methoxy-2'-carboxybenzophenone, 2-hydroxy-4-oxybenzylbenzophenone, 2-hydroxy-4-chlorobenzophenone, 2-hydroxy-5-chlorobenzophenone, 2-hydroxy-4-methoxy-4'-methylbenzophenone, 2-hydroxy-4-n-heptoxybenzophenone, 2-hydroxy-3,6-dichloro-4-methoxybenzophenone, 2-hydroxy-3,6-dichloro-4-ethoxybenzophenon or 2-hydroxy-4-(2-hydroxy-3-methylacryloxy)propoxybenzophenone may, for example, be mentioned.

As other ultraviolet absorbers, a benzotriazole type ultraviolet absorber such as 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-4'-octoxy)benzotriazole, 2-(2'-hydroxy-3',5'-di-tert-butylphenyl)5-chlorobenzotriazole, 2-(3'-tert-butyl-2'-hydroxy-5'-methylphenyl)5-chlorobenzotriazole or 2-(2'-hydroxy-5-ethoxyphenyl)benzotriazole; a phenylsalicylate type ultraviolet absorber such as phenylsalicylate, p-octylphenylsalicylate, p-tert-butylphenylsalicylate, carboxylphenylsalicylate, methylphenylsalicylate or dodecylphenylsalicylate; an ester type ultraviolet absorber such as dimethyl p-methoxybenzylidenemalonate, 2-ethylhexyl-2-cyano-3,3'-diphenylacrylate or ethyl-2-cyano-3,3'-diphenylacrylate; 3,5-di-tert-butyl-p-hydroxybenzoate, resorcinol monobenzoate which is rearranged by ultraviolet rays into benzophenone, 2,4-di-tert-butylphenyl or 3,5-di-tert-butyl-4-hydroxybenzoate may, for example, be mentioned.

As the antioxidant or the age resistor, 2,6-di-tert-butyl-4-methylphenol, 2,4,6-tri-tert-butylphenol, styrenated phenol, 2,2'-methylenebis(4-methyl-6-tert-butylphenol), 4,4'-isopropylidenebisphenol, 2,6-bis(2'-hydroxy-3'-tert-butyl-5'-methylbenzyl)-4-methylphenol, 4,4'-thiobis-(3-methyl-6-tert-butylphenol), tetrakis{methylene(3,5-di-tert-butyl-4-hydroxyhydrocinnamate)}methane, p-hydroxyphenyl-3-naphthylamine, 2,2,4-trimethyl-1,2-dihydroquinoline, thiobis(β-naphthol), mercaptobenzothiazole, mercaptobenzimidazole, aldol-2-naphthylamine, bis(2,2,6,6-tetramethyl-4-piperidyl)sebacate, 2,2,6,6-tetramethyl-4-piperidylbenzoate, dilauryl-3,3'-thiodipropionate, distearyl-3,3'-thiodipropionate or tris(4-nonylphenol)phosphite may, for example, be mentioned.

As the singlet oxygen quencher, carotene, a dye, an amine, a phenol, a nickel complex or a sulfide may, for example, be mentioned, and 1,4-diazabicyclo(2,2,2)octane, β-carotene, 1,3-cyclohexadiene, 2-diethylaminomethylfuran, 2-phenylaminomethylfuran, 9-diethylaminomethylanthracene, 5-diethylaminomethyl-6-phenyl-3,4-dihydroxypyran, nickel dimethyldithiocarbamate, nickel dibutyldithiocarbamate, nickel 3,5-di-t-butyl-4-hydroxybenzyl-o-ethylphosphonate, nickel 3,5-di-t-butyl-4-hydroxybenzyl-o-butylphosphonate, nickel {2,2'-thiobis(4-t-octylphenolate)}(n-butylamine), nickel {2,2'-thiobis(4-t-octylphenolate)}(2-ethylhexylamine), nickelbis{2,2'-thiobis(4-t-octylphenolate)}, nickelbis{2,2'-sulfonebis(4-octylphenolate)), nickelbis(2-hydroxy-5-methoxyphenyl-N-n-butylaldoimine), nickelbis(dithiobenzyl), nickelbis(dithiobiacetyl) may, for example, be mentioned.

Further, components other than the above may be contained within a range not to impair various performances of the visual information recording layer such as recording properties, visibility and recording sensitivity. Such optional components may be used alone or two or more of them may be used together.

The total of the contents of these additives and the dispersing agent is at most 20 wt%, preferably at most 10 wt% based on the coating liquid.

The visual information recording layer is formed by preparing a recording layer coating liquid by using the above materials for formation of the visual information recording layer and coating the coating liquid on a region on which the visual information recording layer is to be provided, followed by drying.

In the preparation of the coating liquid for visual information recording layer, the organic matter particles, the binder resin, various optional additives, etc. have to be uniformly dispersed in an appropriate organic solvent in which the binder resin is dissolved, and the order of addition is not limited. For example, the organic matter particles alone are uniformly dispersed in the organic solvent and then the binder resin is uniformly mixed for preparation, the organic matter particles are uniformly mixed and dispersed in a binder resin solution having the binder resin dissolved in the organic solvent for preparation, or the organic matter particles are uniformly dispersed together with the binder resin in the organic solvent for preparation, and any method may be employed.

As the organic solvent in which the binder resin is dissolved, an ether such as dibutyl ether, isopropyl ether, dioxane or tetrahydrofuran; a ketone such as acetone, diethyl ketone, methyl ethyl ketone, methyl isobutyl ketone or methyl propyl ketone; an ester such as ethyl acetate, isopropyl acetate, n-propyl acetate or n-butyl acetate; or an aromatic hydrocarbon such as benzene, toluene or xylene may, for example, be mentioned. They may be used alone or as mixed.

As the method for forming the visual information recording layer, a known wet thin film formation method may be employed, and preferred is a spin coating method or a screen printing method, and more preferred is a spin coating method.

The thickness of the visual information recording layer is usually at least 10 nm, preferably at least 50 nm, and usually at most 500 nm, preferably at most 300 nm.

In a case where the visual information recording layer is for recording information by irradiation with light, it may contain the photothermal converter and the organic matter particles in the same layer, or the visual information recording layer may contain the organic matter particles and a photothermal converting layer containing the photothermal converter may be provided in contact with the recording layer. The photothermal converting layer may be provided in contact with either side of the visual information recording layer, however, in a case where it is provided on the recording light incident side, it is preferably one which is transparent in the visible light wavelength region, and it is preferably one having an absorbance of at most 5% in said wavelength region.

In the information recording medium of the present invention, usually an overcoat layer is provided on the visual information recording layer by using an ultraviolet-curing resin. The overcoat layer is provided with a purpose of protecting the visual information recording layer from physical abrasion or excessive pressure, moisture in the atmosphere, etc. Further, in a case where visual information is recorded by heating, it is useful to prevent attachment of the thermal head, and in a case where visual information is recorded by irradiation with light, it is useful for the focus of the recording light.

In a case where visual information is recorded by irradiation with light, the overcoat layer is preferably one which is transparent at said recording light wavelength, and it is preferably one having an absorbance of at most 5% at said wavelength. For focusing of the recording light (for efficient light condensing), it preferably has a certain thickness of at least 10 µm. The overcoat layer is not necessarily transparent, and may be transparent or translucent so that the recording layer is shown through the overcoat layer, however, it is preferably one which is transparent in the visible light wavelength region. Specifically, one having an absorbance of at most 5% in said wavelength region is preferred for example. In a case where the visual information recording layer is for recording information by irradiation with light, the absorbance of the overcoat layer at said recording light wavelength is preferably as small as possible, and is preferably at most 5% for example.

The ultraviolet-curing resin for formation of the overcoat layer is not particularly limited so long as it satisfies the above conditions, and an acrylic resin such as urethane acrylate, epoxyacrylate or ester acrylate may be mentioned.

Specifically, an ultraviolet-curing resin comprising from 20 to 80 wt% of the following (1) acrylate oligomer, from 10 to 70 wt% of the following (2) acrylic monomer, from 1 to 10 wt% of the following (3) photoradical initiator and the like is preferred.

### (1) Acrylate oligomer

An epoxyacrylate oligomer obtained by reaction of (meth)acrylic acid with an epoxy resin made of bisphenol A, F, S, novolak or the like as a material;
a urethane acrylate oligomer obtained by reaction of a (di)isocyanate compound, a polyhydric alcohol and (meth)acrylic acid, such as a reaction product of 2-hydroxyethyl acrylate and a polyurethane comprising hexamethylene diisocyanate and 1,6-hexanediol, or a product obtained by reacting 2-hydroxyethyl acrylate with a diisocyanate oligomer obtained by reacting tolylene diisocyanate and a polyester diol comprising adipic acid and 1,6-hexanediol;
an ester acrylate oligomer obtained by reacting a polyhydric alcohol, a polybasic acid or its anhydride and (meth)acrylic acid, such as an ester of acrylic acid and a polyester diol comprising a ring-opening polymerized product of propylene oxide and phthalic anhydride, an ester of acrylic acid and a polyester diol comprising adipic acid and 1,6-hexanediol, an ester of acrylic acid and a triol comprising a reaction product of trimellitic acid and diethylene glycol, or an ester of acrylic acid and a ring-opening polymerized product of δ-valerolactone;
an ether acrylate oligomer obtained by reacting (meth)acrylic acid with e.g. a polyhydric alcohol obtained by adding ethylene oxide or propylene oxide to a hydroxyl group-containing compound, polyethylene glycol or polypropylene glycol, etc.

### (2) Acrylic monomer

A monofunctional monomer such as 2-ethylhexyl acrylate, 2-hydroxyethyl acrylate, 2-hydroxypropyl acrylate, phenoxyethyl acrylate, nonylphenoxyethyl acrylate, N-vinylpyrrolidone, 2-hydroxyethylacryloylphosphate, tetrahydrofurfuryl acrylate, tetrahydrofurfuryl oxyethyl acrylate, tetrahydrofurfuryl oxyhexanolide acrylate, acrylate of ε-caprolactone adduct of 1,3-dioxane alcohol, or 1,3-dioxolane acrylate;
A polyfunctional monomer such as cyclopentenyl acrylate, 1,6-hexanediol diacrylate, diethylene glycol diacrylate, tripropylene glycol diacrylate, neopentyl glycol diacrylate, polyethylene glycol (400) diacrylate, neopentyl glycol hydroxypivalate diacrylate, diacrylate of neopentyl glycol adipate, diacrylate of ε-caprolactone adduct of neopentyl glycol hydroxypivalate, 2-(2-hydroxy-1,1-dimethylethyl)-5-hydroxymethyl-5-ethyl-1,3-dioxane diacrylate, tricyclodecane dimethylol diacrylate, diacrylate of ε-caprolactone adduct of tricyclodecane dimethylol, trimethylolpropane triacrylate, pentaerythritol triacrylate, dipentaerythritol hexaacrylate, propionic acid dipentaerythritol triacrylate, hydroxypivalaldehyde modified dimiethylolpropane triacrylate, tetraacrylate of propionic acid dipentaerythritol, or ditrimethylolpropane tetraacrylate, etc.

### (3) Photoradical initiator

An acetophenone type compound, a propiophenone type compound, an anthraquinone type compound, a thioxanthone type compound, etc.

The ultraviolet-curing resin may contain silica, a colorant such as a pigment or a dyestuff, a polymerization terminator, a storage stabilizer, a dispersing agent, an antifoaming agent, a surfactant, a binder resin other than the ultraviolet-curing resin, etc. within a range not to significantly impair the performance required for the above-described overcoat layer.

The hardness of the overcoat layer varies depending upon the type and the content of the monomer or oligomer contained in the ultraviolet-curing resin to be used for formation of said layer, the content of the optional component such as a binder resin, etc. The hardness tends to be low when a monofunctional monomer is contained in a relatively large amount rather than the polyfunctional monomer as the monomer, and the hardness tends to be low when a urethane acrylate oligomer is contained in a large amount as the oligomer.

As the method for forming the overcoat layer, a method may be mentioned wherein the ultraviolet-curing resin as it is or a coating liquid prepared by dissolving the resin in a proper solvent is coated on the side which is irradiated with light or heated for visual information recording of the visual information recording layer by means of e.g. a spin coating method, a dip coating method, a bar coating method, a blade coating method, an air knife coating method, a roll coating method or a screen printing method, followed by curing by irradiation with ultraviolet rays. Among the above coating methods, a spin coating method is preferred in view of high productivity, surface smoothness of the obtained overcoat layer and the like.

As the light source for irradiation with ultraviolet rays, a high-pressure mercury-vapor lamp, a metal halide lamp or the like is used. The amount of the irradiation energy is selected within a range of usually from 150 to 2000 mJ/cm², preferably from 250 to 1000 mJ/cm². In such a case, the coating film undergoes curing in several minutes, such being excellent in productivity.

The thickness of the overcoat layer is preferably from about 1.0 to about 100 µm, however, the thickness is properly adjusted depending upon the means for recording visual information. In view of protection of the visual information recording layer, it is usually at least 1.0 µm, preferably at least 3.0 µm, and usually at most 15 µm, preferably at most about 10 µm.

As described above, in a case where visual information is recorded by irradiation with light, a thickness to a certain extent is preferred for focusing of the recording light, and specifically, the thickness is preferably at least 10 µm, more preferably at least 20 µm, and the upper limit of the thickness is usually about 100 µm, more preferably about 80 µm. If the thickness of the overcoat layer is smaller than 10 µm, the effect of stabilizing the focus of the recording light tends to be insufficient, and there is a fear that recording can not stably be carried out. Further, if the thickness of said layer is higher than 100 µm, the influence of warpage of the medium due to shrinkage on curing of the coating film, warpage of the medium due to the difference in moisture absorption properties between the overcoat layer and a substrate material as described hereinafter, etc. tends to be significant, and there is a possibility that no information recording medium with stable warpage can be obtained.

In order to effectively condense the recording light for stable focusing by the overcoat layer, the refractive index of said layer is preferably at least 0.4 and at most 2.6, particularly preferably at least 0.5 and at most 1.9.

Now, the information recording medium of the present invention will be explained with reference to a drawing. Fig. 1 is a cross-sectional view illustrating one example of the embodiments of the information recording medium of the present invention. In Fig. 1, on a substrate 1, an electronic information recording layer 2, a reflective layer 3 and a protective layer 4 are provided, and a visual information recording layer 5 and an overcoat layer 6 are formed thereon. An optical information recording medium 10 consisting of the substrate 1 to the protective layer 4 represents a usual CD-R.

The material constituting the substrate 1 is basically one which is transparent to the wavelength of the recording light and the retrieving light, and as such a material, a polymeric material such as a polycarbonate type resin, an acrylic resin, a methacrylic resin, a polystyrene type resin, a vinyl chloride resin, an epoxy resin, a polyester resin or an amorphous polyolefin resin, or an inorganic material such as glass may, for example, be used. Particularly, a polycarbonate resin is excellent in view of high light transparency, a small optical anisotropy and a high strength, and is preferred. In view of chemical resistance, moisture absorption resistance, optical characteristics, etc., amorphous polyolefin is preferred.

On the side which is in contact with the electronic information recording layer 2 of the substrate 1, guide grooves or pits for recording and retrieving may be provided. Such guide grooves or pits are preferably formed at the time of formation of the substrate 1, however, they may be formed by using an ultraviolet (UV)-curing resin on the substrate 1.

Of the thickness of the substrate 1, the lower limit is usually 1.1 mm, preferably 1.15 mm, and the upper limit is usually 1.3 mm, preferably 1.25 mm.

The electronic information recording layer 2 may be directly formed on the substrate 1, or may be formed by means of an optional layer as the case requires.

The electronic information recording layer 2 is not particularly limited so long as recording is possible by irradiation with a laser beam, and may be either an electronic information recording layer comprising an organic material or an electronic information recording layer comprising an inorganic material.

For the electronic information recording layer comprising organic materials, organic dyes are mainly used. As such organic dyes, macrocyclic azaannulene dyes (such as phthalocyanine dyes, naphthalocyanine dyes or porphyrin dyes), polymethine dyes (such as cyanine dyes, merocyanine dyes or squarylium dyes), anthraquinone dyes, azulenium dyes, azo dyes, the metal complex of azo dyes or metal complex of indoaniline dyes may, for example, be mentioned. Among them, the metal complex of azo dyes, cyanine dyes and phthalocyanine dyes are preferred. Particularly, the metal complex of azo dyes are preferred since it is excellent in durability and light resistance.

As the method for forming the electronic information recording layer 2 comprising an organic material, a dry thin film formation method such as a vacuum deposition method or a sputtering method, or a wet thin film formation method which is generally carried out, such as a casting method, a spin coating method or a dipping method may be mentioned, and a spin coating method is particularly preferred in view of mass productivity and cost.

For the electronic information recording layer comprising an inorganic material, Tb, Te, Co or a rare earth transition metal alloy such as Dy·Fe·Co for recording by photomagnetic effect may, for example, be used. Further, a chalcogenide alloy such as Ge·Te or Ge·Sb·Te which undergoes phase change may also be used. Such a layer may be a single layer or may consists of two or more layers.

As the method for forming the electronic information recording layer 2 comprising an inorganic material, a deposition method, an ion plating method or a sputtering method may, for example, be mentioned, and a sputtering method is particularly preferred in view of mass productivity and cost.

The thickness of the electronic information recording layer 2 varies depending upon the type of the recording layer, and the lower limit is usually 5 nm, preferably 10 nm, and the upper limit is usually 500 nm, preferably 300 nm.

The reflective layer 3 is provided on the electronic information recording layer 2, and as the material of the reflective layer 3, one having an adequately high reflectivity at the wavelength of the retrieving light, for example, a metal such as Au, Al, Ag, Cu, Ti, Cr, Ni, Pt, Ta or Pd may be used alone or as an alloy. Among them, Au, Al and Ag have a high reflectivity and are suitable as the material for reflective layer. Particularly, one containing Ag as the main component is particularly preferred in view of the low cost, a high reflectivity, etc.

As the method for forming the reflective layer 3, a deposition method, an ion plating method or a sputtering method may, for example, be mentioned, and a sputtering method is particularly preferred in view of mass productivity and cost.

The lower limit of the thickness of the reflective layer 3 is usually 30 nm, preferably 50 nm, and the upper limit is usually 150 nm, preferably 120 nm.

Usually, in the information recording medium 10, the protective layer 4 is provided on the surface side (upper side) of the electronic information recording layer 2 and the reflective layer 3. In the information recording medium of the present invention, no layer may be present between the reflective layer 3 and the visual information recording layer 5, however, in a case where the visual information recording layer 5 is formed on the surface of the conventional information recording medium, the protective layer 4 is present between the reflective layer 3 and the visual information recording layer 5. Accordingly, in a case where visual information is recorded by irradiation with light, the protective layer 4 preferably comprises a substance transparent to a laser beam.

The substance transparent to a laser beam forming the protective layer is not particularly limited so long as it is one which is transparent to a laser beam. Generally, widely used as a protective layer for an information recording medium is an ultraviolet (UV)-curing resin, and most of such resins are transparent to a laser beam, and are suitable for the present invention.

As the UV-curing resin, an acrylate type resin such as urethane acrylate, epoxy acrylate or polyester acrylate may be used, and specifically, the same material as one used for formation of the above overcoat layer may optionally be selected. As such a UV-curing resin, one type may be used alone or two or more types may be mixed. Further, the protective layer 4 may be a single layer film consisting of one layer or a multilayer film consisting of two or more layers.

The protective layer 4 comprising the UV-curing resin may be formed by coating the UV-curing resin as it is or a coating liquid prepared by dissolving the UV-curing resin in a proper solvent on the reflective layer 3, followed by irradiation with UV rays for curing. In this case, as the coating method, a spin coating method or a casting method may, for example, be employed. The protective layer may be formed also by a printing method such as a screen printing method, and is formed by a method suitably selected depending upon the material to be used. Among them, a spin coating method is particularly preferred, and a spin coating method is commonly employed.

The lower limit of the thickness of the protective layer 4 is usually 1.0 µm, preferably 3.0 µm, and the upper limit is usually 15 µm, preferably 10 µm.

In the information recording medium of the present invention, usually a visual information recording layer 5 containing organic matter particles and an overcoat layer 6 comprising an ultraviolet-curing resin are provided on the protective layer 4 by the above-described method.

Fig. 1 is to represent one example of the embodiments of the information recording medium of the present invention, and the information recording medium of the present invention is by no means restricted to one having the layer constitution as shown in Fig. 1, and preferably, in the information recording medium of the present invention, a colored layer or a reflective layer is provided beneath the visual information recording layer. Specifically, a colored layer or a reflective layer is provided on the side opposite to the light incident side or the heat application side for visual information recording, relative to the visual information recording layer 5.

In a case where a colored layer is provided, in the constitution as shown in Fig. 1 for example, the protective layer 4 itself may be colored to function as a colored layer or a colored layer may be separately formed between the protective layer 4 and the visual information recording layer 5.

The colored layer may be formed by using a material transparent to a laser beam in the same manner as the protective layer, such as a UV-curing resin, and coloring it into a desired color by means of a coloring agent such as a dyestuff. Visual information is recorded by the part on which recording is carried out being transparentized. Accordingly, by providing the colored layer, the colored layer as a base at the part on which recording is carried out becomes clearly visible, and thus visibility and design properties can be increased, such being favorable.

By providing a reflective layer to reflect a laser beam for visual information recording on the lower side (the side opposite to the plane of incidence of the laser beam for visual information recording) of the visual information recording layer, it is possible to carry out stable focusing by means of the reflected light at the time of visual information recording by irradiation with light, such being favorable.

In a case where a reflective layer is provided, in the constitution as shown in Fig. 1 for example, a reflective layer may be provided (in addition to the reflective layer 3) between the protective layer 4 and the visual information recording layer 5, or the protective layer 4 may be a transparent layer so that the reflective layer 3 functions for both the electronic information recording layer and the visual information recording layer. However, the reflective layer is preferably a reflective layer for both the visual information recording layer and the electronic information recording layer so as to simplify the constitution of the optical information recording medium to reduce the production cost.

The electronic information recording layer of the information recording medium of the present invention may be a phase-change type recording layer capable of recording and erasing, and the protective layer between the visual information recording layer 5 and the reflective layer 3 may be at least two layers so long as they are transparent to a laser beam, or it may not be present.

Further, in the present invention, the visual information recording layer 5 may be directly formed on the outermost layer (protective layer 4) of the optical information recording medium such as CD-R, or the visual information recording layer 5 may be formed by means of a layer transparent to a laser beam such as an adhesive layer.

Further, the present invention is not limited to the optical information recording medium having the above constitution of e.g. CD-R, and various modifications may be made. For example, the optical information recording medium may have a plurality of electronic recording layers. Further, in a case where a recording medium comprising a substrate (first substrate) having a thickness of about 0.6 mm and having guide grooves and/or pits and a so-called dummy substrate (second substrate) not having guide grooves and/or pits, the present invention may be applied by employing a laminate structure comprising first substrate/electronic information recording layer/reflective layer/adhesive layer/second substrate/visual information recording layer/overcoat layer or a laminate structure comprising first substrate/electronic information recording layer/reflective layer/adhesive layer/visual information recording layer/second substrate. Further, another layer may be provided between the layers or as an outermost layer as the case requires.

Further, the present invention is not limited to a so-called substrate face incident type optical information recording medium, and in a case of a so-called film face incident type optical recording medium on which a laser beam is irradiated from the protective layer side (i.e. film face side) for recording and retrieving information, the present invention may be applied by employing a laminate structure comprising overcoat layer/visual information recording layer/substrate/reflective layer/electronic information recording layer/protective layer. Further, another layer may be provided between the layers or as an outermost layer as the case requires.

Further, the visual information recording region provided on the information recording medium of the present invention may be the entire face on one side of the disk-shape information recording medium, or may be one part on the face of one side, or may be formed on both faces.

On the visual information recording layer in the information recording medium of the present invention, recording is possible in non-contact manner, and accordingly a case where visual information recording is possible by irradiation with light is more preferred since the influence of pressurization over the electronic information recording layer tends to be small and finer recording becomes possible.

### EXAMPLES

Now, the present invention will be explained in further detail with reference to Examples and Comparative Examples. However, the present invention is by no means restricted to such specific Examples within a range not to exceed the object of the present invention.

In the following Examples and Comparative Examples, recording of visual information on an optical information recording medium was carried out by using a recording apparatus as shown in Fig. 2.

The apparatus shown in Fig. 2 is to carry out visual information recording on an optical disk having a visual information recording layer by a usual optical disk drive. An optical disk 11 is mounted on a spindle 12 and rotated by a spindle motor 13, and at the same time, a screw axis 15 is rotated by a stepping motor 14 for feed to move a pickup 16 to an optional position. A spindle motor 14 is servo controlled by FG pulse signals to adjust the disk 11 to an optional speed of rotation. The focus is adjusted on the disk 11 face by the focus servo, and a laser beam 17 is condensed to write visual information on the disk 11.

At this occasion, the laser power is controlled by a front monitor so that writing at an appropriate power can be carried out. As the write signal, pulses with a duty of about 50% are irradiated on the disk face at an output of from 40 to 50 mW. The speed of rotation of the spindle is from 160 to 2560 rpm.

### EXAMPLE 1

A polycarbonate substrate having a thickness of 1.2 mm and having grooves with a width of 0.45 µm and a depth of 155 nm was obtained by injection molding. The substrate 1 was coated with a fluorine alcohol solution of the metal complex of azo dyes by spin coating, followed by drying at 90°C for 15 minutes to form an electronic information recording layer 2 having a film thickness of 100 nm. Further, Ag was sputtered on the electronic information recording layer 2 to form a reflective layer 3 having a thickness of 70 nm.

On the reflective layer 3, an ultraviolet-curing resin composed mainly of an acrylate type monomer ("SD-374" manufactured by DAINIPPON INK AND CHEMICALS, INCORPORATED) was coated by spin coating, followed by irradiation with ultraviolet rays for curing to form a protective layer 4.

On the protective layer 4 of CD-R 10 thus prepared, as the visual information recording layer, a toluene solution comprising the components as shown in the following Table 1 (coating liquid for visual information recording layer formation) was prepared, and the coating liquid was coated by a spin coating method, followed by drying at 50°C for 30 minutes to form a visual information recording layer 5 having a thickness of about 2 µm.

**TABLE 1**

| COATING LIQUID FOR VISUAL INFORMATION RECORDING LAYER FORMATION | | |
|---|---|---|
| Organic matter particles | 2,4-Dihydroxybenzoic acid (average particle size 1.5 µm) | 0.60 part by weight |
| Photothermal converter | 9,19-Dioxadinaphtho[3,2,1-de; 3,2,1-OP]pentacene derivative of the following structural formula | 0.070 part by weight |
| Binder resin solution | Toluene solution of methylpolymethacrylate (BR-80, tradename, manufactured by Mitsubishi Rayon Co., Ltd.: solid content concentration 20 wt%) | 3.90 parts by weight |
| Solvent | Toluene | 1.95 parts by weight |

### Preparation of Toluene Coating Liquid for Visual Information Recording Layer Formation

0.60 g of 2,4-dihydroxybenzoic acid (manufactured by YAMADA CHEMICAL CO., LTD.), 0.07 g of a photothermal converter (following structural formula), 3.90 g of a binder resin solution, 1.95 g of toluene and 15 ml of zirconia beads having a particle size of 0.5 mm were added in a glass container of 50 ml, followed by shaking by a paint shaker for 3 hours. Then, the zirconia beads were separated by filtration to prepare a fine particulate dispersion of 2,4-dihydroxybenzoic acid.

The particle size distribution of 2,4-dihydroxybenzoic acid of the obtained dispersion was measured by microtrack 9340UPA (manufactured by NIKKISO CO., LTD.) and as a result, the average particle size was 1.5 µm. 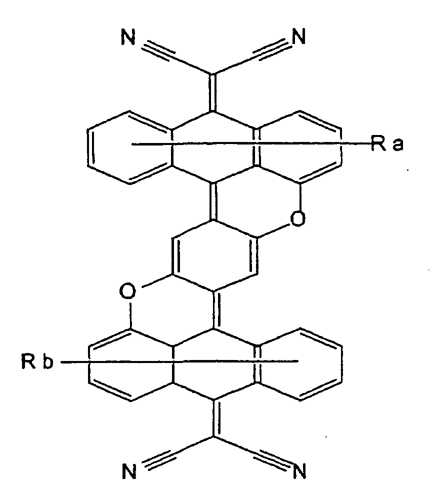 wherein each of Ra and Rb which are independent of each other, is a tert-amyl group or a sec-amyl group, and each of Ra and Rb is tert:sec=1:1.

On the visual information recording layer 5 formed as mentioned above, the same ultraviolet-curing resin composed mainly of an acrylate type monomer ("SD-374" manufactured by DAINIPPON INK AND CHEMICALS, INCORPORATED) as one used for formation of the protective layer 4 was coated by spin coating, followed by irradiation with ultraviolet rays for curing to form an overcoat layer having a thickness of 7 µm.

On the information recording medium prepared by the above method, the overcoat layer formed face (label face) was irradiated with 50 mW laser by using the recording apparatus as shown in Fig. 2 to carry out character recording (visual information).

A stable focus could be obtained and desired recording could be carried out, and no problem arouse on the electronic information recording. The results are shown in Table 3.

In Table 3, the evaluations of recording visibility are based on the following standards.
Recording visibility evaluation
Good: Recorded part clearly recognizable.
Fairly good: Recorded part recognizable.
Poor: Recorded part substantially unrecognizable.

### EXAMPLES 2 to 4 and COMPARATIVE EXAMPLES 1 to 3

The same operation as in Example 1 was carried out except that the type and/or the amount of the organic matter particles in the visual information recording layer of Example 1 was changed as disclosed in the following Table 2 to prepare an information recording medium, and recording was carried out on the label face of the visual information recording layer.

In Examples 2 to 4 and Comparative Examples 1 to 3 also, the average particle size of the dispersion of the organic matter particles was measured in the same manner as in Example 1.

As a result, in Examples 2 to 4, recording could be carried out favorably in the same manner as in Example 1, and no problem arouse on the electronic information recording. In Comparative Examples 1 and 2, the organic matter particles were not uniformly dispersed in the visual information recording layer (coarse particles), and recording could not be carried out. In Comparative Example 3, since the melting point of the organic matter particles was too high, recording could not be carried out with heat generation of the photothermal converter by irradiation with recording light. The above results are put together and shown in Table 3.

**TABLE 2**

| | Organic matter particles | Melting point (°C) | (wt%) |
|---|---|---|---|
| Example 1 | 2,4-DHBA | 148 | 40 |
| Example 2 | 2,4-DHBA | 148 | 60 |
| Example 3 | 2,4-DHBA | 148 | 70 |
| Example 4 | 3,4-DHBA | 179 | 60 |
| Comparative Example 1 | CVL | 168 | 54 |
| Comparative Example 2 | ETAC | 207 | 54 |
| Comparative Example 3 | BLMG | 195 | 54 |

The organic matter particles abbreviated in the above Table represent as follows.
2,4-DHBA: 2,4-Dihydroxybenzoic acid manufactured by YAMADA CHEMICAL CO., LTD.
3,4-DHBA: 3,4-Dihydroxybenzoic acid manufactured by YAMADA CHEMICAL CO., LTD.
CVL: Trade name, leuco dye manufactured by YAMADA CHEMICAL CO., LTD.
ETAC: Trade name, leuco dye manufactured by YAMADA CHEMICAL CO., LTD.
BLMB: Trade name, leuco dye manufactured by YAMADA CHEMICAL CO., LTD.

### TEST EXAMPLES

### Heat Resistance Test

With respect to the information recording mediums on which favorable recording could be carried out of Examples 1 to 4, after they were left to stand under the following three conditions, the heat resistance evaluation was carried out by means of the recording visibility. The results are shown in Table 3.
Temperature: 60°C, 70°C, 80°C
Humidity: 30%RH
Time: 5 hours

### Moistening Test

With respect to the information recording mediums on which favorable recording could be carried out of Examples 1 to 4, after they were left to stand under the following condition, moistening evaluation was carried out by means of the recording visibility. The results are shown in Table 3.
Temperature: 30°C
Humidity: 90%RH
Time: 16 hours

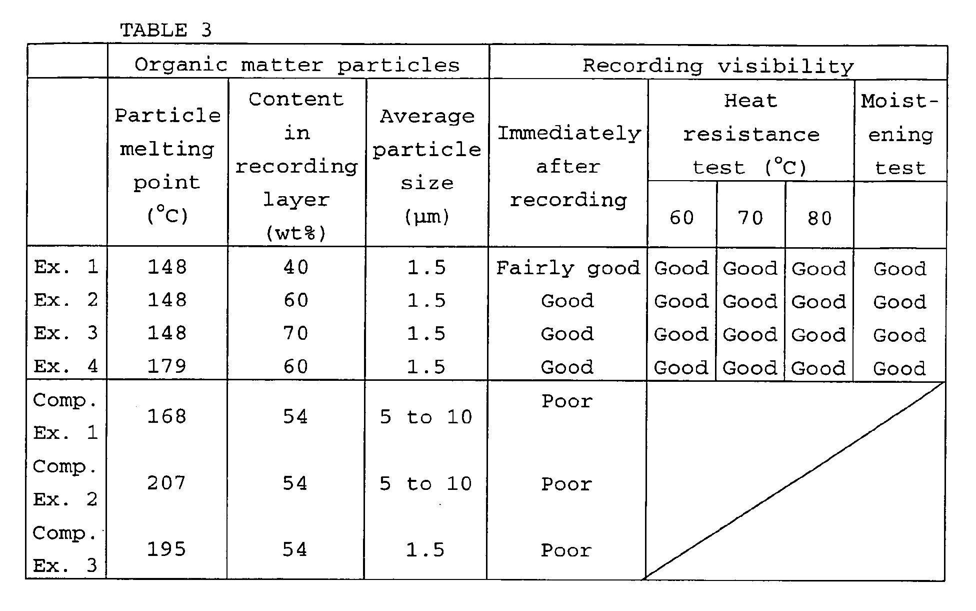

In Comparative Examples 1 to 3, visibility was already poor immediately after recording, and accordingly the heat resistance test and the moistening test were not carried out.

The entire disclosure of Japanese Patent Application No. 2003-015644 filed on January 24, 2003 including specification, claims, drawings and summary is incorporated herein by reference in its entirety.

## Claims

1. An information recording medium having at least a visual information recording layer for recording visual information and a substrate, **characterized in that** the visual information recording layer contains organic matter particles having a melting point of at least 50°C and at most 180°C and an average particle size of at least 0.5 µm and at most 2.0 µm, and is capable of recording by heating or irradiation with light without substantial chemical change of the organic matter particles.

2. The information recording medium according to Claim 1, wherein the visual information recording layer is formed by using a binder resin having the organic matter particles dispersed therein, and the weight ratio of the organic matter particles in the visual information recording layer is at least 25% and at most 70%.

3. The information recording medium according to Claim 1 or 2, wherein the organic matter particles in the visual information recording layer are melted by heating or irradiation with light and transparentized so that visual information is recorded.

4. The information recording medium according to any one of Claims 1 to 3, wherein the visual information recording layer contains a photothermal converter.

5. The information recording medium according to any one of Claims 1 to 4, wherein the visual information recording layer has a colored layer or a reflective layer on its substrate side face.
